# EUROPEAN PATENT APPLICATION

(11) **EP 3 951 708 A1**
(43) Date of publication of application: **09.02.2022**
(21) Application number: 20779859.6
(22) Date of filing: 30.03.2020
(51) Int. Cl.: G06T 7/00

(54) **IMAGE RECOGNITION DEVICE AND IMAGE RECOGNITION PROGRAM**

(30) Priority: 28.03.2019 JP 2019063807
(71) Applicant: AISIN CORPORATION, Aichi 448-8650 (JP); Kyushu Institute of Technology, Kitakyushu-shi Fukuoka 804-8550 (JP)
(72) Inventor: YAMADA Hideo, Tokyo 101-0021 (JP); MURAMATSU Ryuya, Tokyo 101-0021 (JP); SHIBATA Masatoshi, Tokyo 101-0021 (JP); TAMUKOH Hakaru, Kitakyushu-shi, Fukuoka 808-0196 (JP)
(74) Representative: TBK
(86) International application number: PCT/JP2020/014636
(87) International publication number: WO 2020/196917

(57) **Abstract**

The object of this invention is to achieve an image recognition function with low-cost hardware. The image recognition device of this embodiment involves successively extracting co-occurrence pairs in synchronization with a clock, setting a weighting for the portion connecting the input layer and the intermediate layer corresponding to the extracted co-occurrence pairs, and successively inputting a first vote to the input layer. Meanwhile, the intermediate layer adds and stores the successively inputted the number of votes. By continuing this operation, a value the same as if a histogram were inputted to an input layer is achieved in the intermediate layer, without creating a histogram. In this way, the image recognition device of this embodiment can perform image recognition while avoiding the creation of a histogram, which consumes vast amounts of memory. As a result of this configuration, it is possible to save memory resources, simplify circuits, and improve calculation speed, and achieve an integrated circuit suitable to an image recognition device.

## Description

### TECHNICAL FIELD

The present invention relates to an image recognition device and an image recognition program, and relates to, for example, those which recognize objects learned.

### BACKGROUND ART

In recent years, technologies to recognize and identify specific objects from images captured with the use cameras have rapidly developed, and they are being used in a variety of areas, for example, driving assistance for automobiles and diagnostic support for medical care.

In these image recognition technologies, a feature amount is extracted from an image by some techniques and compared with a feature amount of an image recognition target (for example, a pedestrian) to determine whether the image recognition target is present in this image.

The technology of Non-Patent Literature 1 is one of technologies which perform this kind of image recognition.

This technology determines a local luminance gradient direction (a gradient direction of a luminance) of an image as a feature element, and uses a HOG feature amount to extract a feature amount of a subject in a feature description portion by showing the number of occurrences of the feature element in the image in a two-dimensional histogram. The technology also identifies whether the HOG feature amount is human-dependent by classifying this feature amount using an SVM (support vector machine).

Other technologies for extracting feature amounts from images include a CoHOG feature amount which has a higher robustness than that of the HOG feature amount, or a MRCoHOG feature amount which has a further higher robustness.

The CoHOG feature amount uses a co-occurrence pair of luminance gradient directions (a pair of luminance gradient directions) in an image as a feature element, and represents the number of occurrences thereof in a two-dimensional histogram.

Furthermore, the MRCoHOG feature amount uses a co-occurrence pair of luminance gradient directions between images with different resolutions of the same subject as a feature amount, and shows the number of occurrences in a two-dimensional histogram.

Meanwhile, in case of using these feature amounts in conventional examples, a histogram is created in a memory, voting has been performed in accordance with each co-occurrence pair (the number of occurrences of a corresponding co-occurrence pair has been counted up).

Therefore, the memory must be set aside on a massive scale every time a histogram is created, and when this is implemented in hardware such as an integrated circuit, the circuit becomes large and a cost increases.

### CITATION LIST

### NON-PATENT LITERATURE

Non-Patent Literature 1: Tomoki Watanabe, Satoshi Ito etc.;"Co-occurrence Histograms of Oriented Gradients for Human Detection", IPSJ Transactions on Computer Vision and Applications, Vol.2 pp.39-47, 2010

### DISCLOSURE OF INVENTION

### PROBLEM TO BE SOLVED BY THE INVENTION

The object of the present invention is to realize an image recognizing function with low-cost hardware.

### SUMMARY OF THE INVENTION(S)

(1) In order to achieve above mentioned object, the invention described in claim 1 provides an image recognition device comprising: feature element acquiring means for acquiring feature elements of an image recognition target; and image recognition means which has an addition layer to which the feature elements are directly input and which weights a plurality of values to the feature elements, and which recognizes an identification target with the use of an addition value obtained by sequentially adding the feature elements in the addition layer.
(2) The invention described in claim 2 provides the image recognition device according to claim 1, wherein the image recognizing means is a binary network which assigns binary weights to the feature elements.
(3) The invention described in claim 3 provides the image recognition device according to claim 1 or 2, wherein the image recognizing means comprises image recognition result outputting means for acquiring a total value of addition values obtained by sequentially adding the feature elements, and then fixing an image recognition result of the image recognition.
(4) The invention described in claim 4 provides the image recognition device according to claim 1 or 2, wherein, the image recognizing means sequentially updates the image recognition result corresponding to the total value of the addition value obtained by sequentially adding the feature elements in connection with the update of the storage, and outputs the image recognition result if the updated image recognition result is the same for a predetermined number of consecutive times.
(5) The invention described in claim 5 provides the image recognition device according to any one of claims 1 to 4, comprising: image acquiring means for acquiring an image; and pixel value acquiring means for acquiring luminance as a pixel value of a pixel in the acquired image, wherein the feature element acquiring means sequentially acquires a plurality of types of feature elements of feature amounts representing features of the image recognition target in accordance with each feature element based on a luminance gradient direction using the acquired luminance, and the image recognizing means performs sequential additions in the addition layer in accordance with each feature element.
(6) The invention described in claim 6 provides the image recognition device according to claim 5, wherein the feature element acquiring means acquires the feature elements based on co-occurrences of the luminance gradient directions.
(7) The invention described in claim 7 provides the image recognition device according to claim 6, wherein the image acquiring means acquires images with different resolutions of the same subject, and the feature element acquiring means acquires the feature elements based on co-occurrences of the images with the different resolutions of the luminance gradient directions.
(8) The invention described in claim 8 provides the image recognition device according to any one of claims 1 to 7, comprising: selecting means for selecting a predetermined feature element of the acquired feature elements and inputting it to the addition layer.
(9) The invention described in claim 9 provides the image recognition device according to any one of claims 1 to 8, comprising: replicating means for sequentially replicating the acquired feature elements and inputting them to the addition layer.
(10) The invention described in claim 9 provides an image recognition program for causing a computer to realize: a feature element acquiring function which acquires feature elements of an image recognition target; and an image recognizing function which has an addition layer to which the feature elements are directly input and which weights a plurality of values to the feature elements, and which recognizes an identification target with the use of an addition value obtained by sequentially adding the feature elements in the addition layer.

### EFFECT OF THE INVENTION(S)

According to the present invention, it is possible to realize an image recognizing function with low-cost hardware without creating the histogram.

### BRIEF DESCRIPTION OF DRAWINGS

FIG. 1 is a view showing an example of a configuration of a computer having an image recognition device implemented therein.
FIGS. 2 are views for illustrating a concept of a HOG feature amounts.
FIGS. 3 are views for illustrating a concept of a CoHOG feature amounts.
FIGS. 4 are views for illustrating a concept of a MRCoHOG feature amounts.
FIGS. 5 are views for illustrating a concept of a calculation method.
FIG. 6 is a view showing a circuit configuration of a feature extraction unit.
FIG. 7 is a view for illustrating resolution conversion processing.
FIGS. 8 are views for illustrating operations of a gradient direction calculation unit.
FIG. 9 is a view for illustrating vertical direction data stretching processing.
FIG. 10 is a view for illustrating horizontal direction data stretching processing.
FIG. 11 is a view for illustrating a mechanism of how a co-occurrence pair calculation unit calculates co-occurrence pairs.
FIGS. 12 are views for illustrating a configuration of an input unit and a recognition unit.
FIG. 13 is a view for illustrating a mechanism of BNN.
FIG. 14 is a view showing a part of an input layer and an intermediate layer.
FIG. 15 is a view showing a part of the intermediate layer and an output layer.
FIG. 16 is a flowchart for illustrating an image processing procedure.
FIG. 17 is a view showing a configuration example of a semiconductor device.
FIGS. 18 are views for illustrating a concept of a modification.
FIGS. 19 are views for illustrating an outline of this embodiment.

### BEST MODE(S) FOR CARRYING OUT THE INVENTION

### (1) Outline of Embodiment

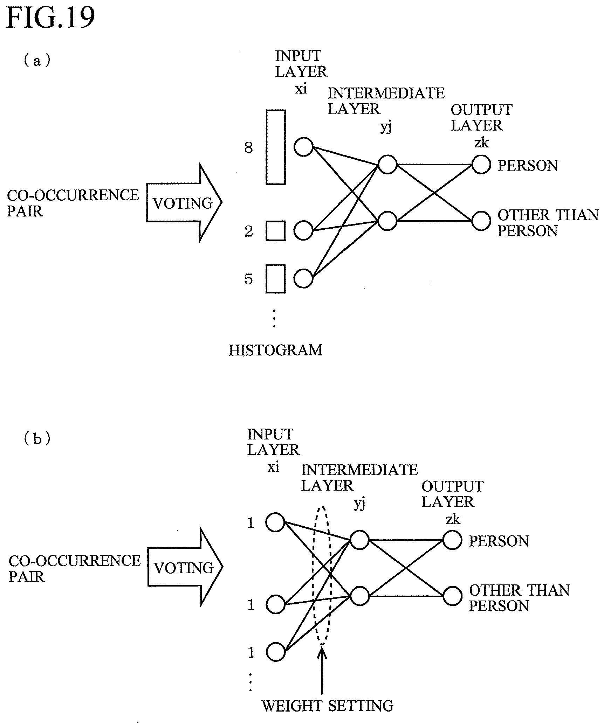

FIGS. 19 are views for illustrating an outline of this embodiment.

As shown in FIG. 19(a), a conventional image recognition device sequentially extracts co-occurrence pairs of gradient luminance directions such as (↑→), (↓←), ... from image, then sorts then, and add the number of occurrences thereof to vote (count up) them on a histogram in a memory.

Consequently, for example, feature amounts of the image are described by the histogram such as (↑→) with eight votes, (↓←) with two votes, and the like.

Further, upon completion of the histogram, the conventional image recognition device inputs it to an input layer in a neural network which has learned an image recognition target in advance, and obtains an image recognition result from an output layer.

In contrast, as shown in FIG. 19(b), the image recognition device according to this embodiment sequentially extracts co-occurrence pairs in synchronization with a clock, sets a weighting of a connecting portion between the input layer and the intermediate layer in correspondence with the extracted co-occurrence pairs, and sequentially inputs one vote to the input layer. On the other hand, the intermediate layer adds/stores the number of votes which are sequentially input.

If this operation is continued, the same values are realized in the intermediate layer as those when inputting the histogram to the input layer without creating the histogram.

It is to be noted that voting on a histogram in the conventional technology means counting up the number of occurrences of corresponding co-occurrence pairs and, on the other hand, voting in this embodiment, which does not create a histogram, means weighting feature elements such as co-occurrence pairs by learning results and then sequentially inputting them into the intermediate layer.

In this way, the image recognition device according to this embodiment can perform the image recognition processing while avoiding the creation of histograms which consume a huge amount of a memory.

This can save memory resources, simplify circuits, and improve a calculation speed, thus suitably making the image recognition device into an integrated circuit.

### (2) Details of Embodiment

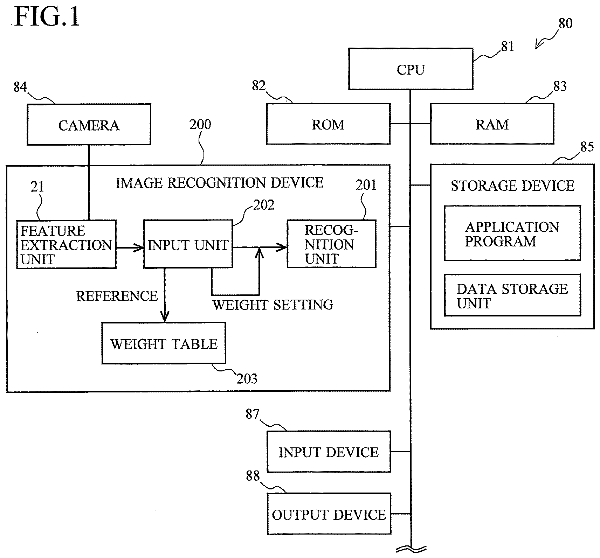

FIG. 1 is a view showing an example of a configuration of a computer 80 having an image recognition device 200 implemented therein according to this embodiment.

The computer 80 is mounted in, e.g., a vehicle, and used for driving assistance such as automatic driving or navigation.

It is to be noted that description will be given on a case where the image recognition device 200 performs the image recognition processing, but this technology can be extensively applied to identification processing performed by artificial intelligence such as speech recognition or medical diagnosis.

The computer 80 is constituted of a CPU (Central Processing Unit) 81, a ROM (Read Only Memory 82), a RAM (Random Access Memory) 83, a camera 84, an image recognition device 200, a storage device 85, an input device 87, an output device 88, and the like.

The CPU 81 performs desired processing according to application programs stored in the storage device 85, and also controls respective units of the computer 80.

The ROM 82 is a read-only memory storing basic programs and parameters for operating the computer 80 by the CPU 81.

The RAM 83 is a memory enabling reading/writing, which provides a working memory for causing the CPU 81 to exert an application function.

An identification result of the image recognition performed by the image recognition device 200 is stored in the RAM 83, and utilized in accordance with an application program.

The camera 84 is a video taking camera, and it takes video of a subject and outputs image data (which will be simply referred to as an image hereinafter) consisting of video frames to the image recognition device 200 in accordance with a time sequence.

It is to be noted that the image recognition device 200 in this embodiment is constituted in such a manner that hardware dedicated to the image recognition is formed of a semiconductor device and the image recognition is performed by this hardware, but the CPU 81 can be constituted to perform the image recognition including extraction of a feature amount in an image in accordance with a program for the image recognition.

Further, the entire computer 80 including the image recognition device 200 may be constituted using dedicated hardware formed of a semiconductor device.

The storage device 85 is, e.g., a storage device using a storage medium such as a hard disk or a semiconductor memory, and it stores application programs and the like which cause the CPU 81 to perform application programs using an identification result based on the image recognition.

Moreover, the storage device 85 also includes a data storage unit which stores the operation setting of the application programs and the like.

This operation setting is provided by setting, e.g., contents on whether an alarm is to be issued to a driver by a user when the image recognition device 200 detects a person.

The input device 87 is a device for inputting various kinds of information to the computer 80, and constituted of an input device such as an operation button to operate the computer 80 by the user.

The output device 88 is a device through which the computer 80 outputs various kinds of information, and it is constituted of an output device such as a liquid crystal display which, for example, displays an operation screen or displays a rectangle enclosing a person (a pedestrian) detected by the image recognition device 200 on video taken by the camera 84.

The image recognition device 200 is a hardware device that identifies a person (which is assumed to be an ordinary pedestrian), an image recognition target, from an image by the image recognition and outputs a result of the image recognition.

The image recognition device 200 includes a feature extraction unit 21 which extracts from an image a feature element (such as a co-occurrence pair) which is a constituent element constituting a feature amount (such as a MRCoHOG feature amount) of the image, an input unit 202 which weights the extracted feature element by making reference to a weight table 203 and inputs it to a recognition unit 201, and the recognition unit 201 which recognizes an image recognition target with the use of a neural network.

Next, a description will be given on a feature amount of an image used in this embodiment.

Some image recognition technologies extract luminance gradient distributions as feature amounts from images and compare them with luminance gradient distributions of images learned in advance to recognize targets.

As the feature amounts based on the luminance gradient distributions, HOG feature amounts (Histograms of Oriented Gradients) are well known and actively studied.

There are CoHOG (Co-occurrence HOG) feature amounts as an extension of the HOG feature amounts and have higher robustness (robust properties) than that of the HOG feature amounts.

Further, in recent years, MRCoHOG (Multi Resolution CoHOG) feature amounts with much higher robustness than that of the CoHOG feature amounts have been suggested.

Experiments have shown that the MRCoHOG feature amounts have extremely high robustness.

These feature amounts are described in a two-dimensional histogram in which elements based on the luminance gradient direction are feature elements and the number of occurrences of these elements voted on is determined as a frequency.

The image recognition device 200 enables the image recognition by sequentially inputting the feature elements into the intermediate layer after weighting them by learning results, without creating histograms for a target whose feature amounts are described in these histograms and, besides the feature amounts described above, the device can be widely applied to cases where feature amounts are described by histograms.

Next, a description will be given on the HOG feature amount, the CoHOG feature amount, and the MRCoHOG feature amount.

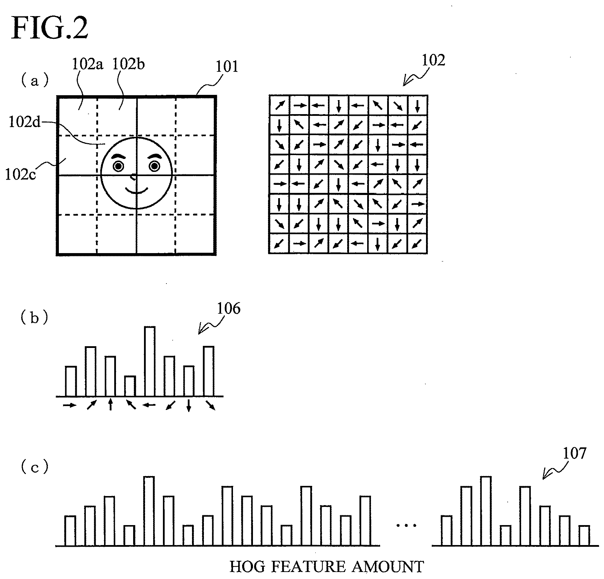

FIGS. 2 are views for illustrating a concept of the HOG feature amounts.

The HOG feature amount is extracted from an image by the following procedure.

An image 101 shown in a left view of FIG. 2(a) is assumed to be an image region of interest provided by an observation window or the like configured to observe a target.

First, the image 101 is divided into rectangular cells 102a, 102b, ....

Then, as shown in a right view of FIG. 2(a), a luminance gradient direction (a direction from a low luminance to a high luminance) of each pixel is quantized in, for example, eight directions for each cell 102.

Then, as shown in FIG. 2(b), a histogram 106 of the luminance gradient directions contained in the cells 102 is created for each cell 102 by generating a histogram with the quantized luminance gradient directions as classes and the number of occurrences as a frequency.

Additionally, normalization is performed so that a total frequency of the histogram 106 becomes 1 in blocks of several cells 102.

In the example of the left view of FIG. 2(a), one block is formed of the cells 102a, 102b, 102c, and 102d.

Arranging the histogram 106a, 106b, ... in a row as shown in FIG. 2(c) and performing the normalization in this manner can result in HOG feature amounts 107 of the image 101.

In case of the HOG feature amounts, the luminance gradient directions become the feature elements, and the histogram thereof becomes the feature amounts.

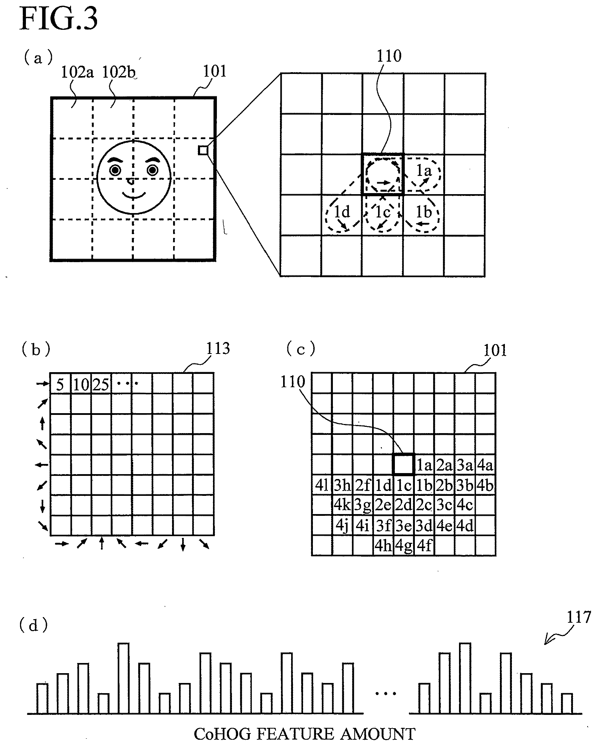

FIGS. 3 are views for illustrating a concept of a CoHOG feature amounts.

The CoHOG feature amounts are feature amounts focusing on co-occurrence pairs in the luminance gradient directions between two pixels in a local region, and are extracted from an image by the following procedure.

As shown in FIG. 3(a), the image 101 is divided into rectangular cells 102a, 102b, .... It is to be noted that the cell is also referred to as a block.

In the CoHOG feature amounts, a pixel of interest 110 is set in the cells 102a, 102b, ..., and a co-occurrence matrix (a histogram concerning the pixel of interest 110) is created by combinations of a luminance gradient direction of the pixel of interest 110 and the luminance gradient directions of pixels at distances 1 to 4 from the pixel of interest 110 (the co-occurrence pairs). It is to be noted that a pixel relating to a combination with the pixel of interest 110 is referred to as an offset.

For example, a distance from the pixel of interest 110 is represented by a formula, and applying this formula enables obtaining pixels 1a to 1d adjacent to the pixel of interest 110 as the pixels at a distance 1 as shown in FIG. 3(a).

It is to be noted that pixels above and on the left side of the pixel of interest 110 are not included because the processing has been already finished as the pixel of interest 110 is sequentially set and processed from a left end of the uppermost pixel line toward the right side.

Subsequently, luminance gradient directions of the pixel of interest 110 and the pixel 1a are observed. The luminance gradient direction is quantized in, for example, eight directions, and the directions are indicated by arrows in the drawings.

The luminance gradient direction of the pixel of interest 110 is a right direction, and the luminance gradient direction of the pixel 1a is an upper right direction. Therefore, a co-occurrence pair based on this is (the right direction, the upper right direction).

Thus, in a co-occurrence matrix 113 in FIG. 3(b), one vote is cast for an element with (a line number, a column number)=(the right direction, the upper right direction).

In the example of FIG. 3(b), as a pair of the luminance gradient directions of the pixel of interest 110 and pixel 1a, 1 is added to the elements of the line with the arrow of the right direction as the line number and the column with the arrow of the upper right direction as the column number, resulting in a value of 10 for this element.

It is to be noted that the co-occurrence matrix 113 should be drawn in a three-dimensional histogram and the number of votes should be represented as a bar graph of a height direction, but the number of votes is represented as a numerical value to simplify the drawing.

Thereafter, voting (counting) is performed in the same way as the combinations of the pixel of interest 110 with pixels 1b, 1c, and 1d.

As shown in Fig. 3(c), centering on the pixel of interest 110, the pixels at a distance 2 are defined as pixels 2a to 2f on the outer periphery of the pixels 1a to 1d, the pixels at a distance 3 are defined as pixels 3a to 3h on the further outer periphery, and the pixels at a distance 4 are defined as pixels 4a to 41 on the still further outer periphery.

They are likewise combined with the pixel of interest 110 and votes are cast for the co-occurrence matrix 113.

The above-described voting processing is performed to all pixels constituting the cells 102, thus obtaining a co-occurrence matrix for each pixel.

Further, this is carried out for all the cells 102, and the histogram of all the co-occurrence matrix components arranged in a row and normalized as shown in Fig. 3(d) is the CoHOG feature amounts 117 of the image 101.

In case of the CoHOG feature amounts, the co-occurrence pairs of the luminance gradient directions in the same image become the feature elements, and the histogram thereof becomes the feature amounts.

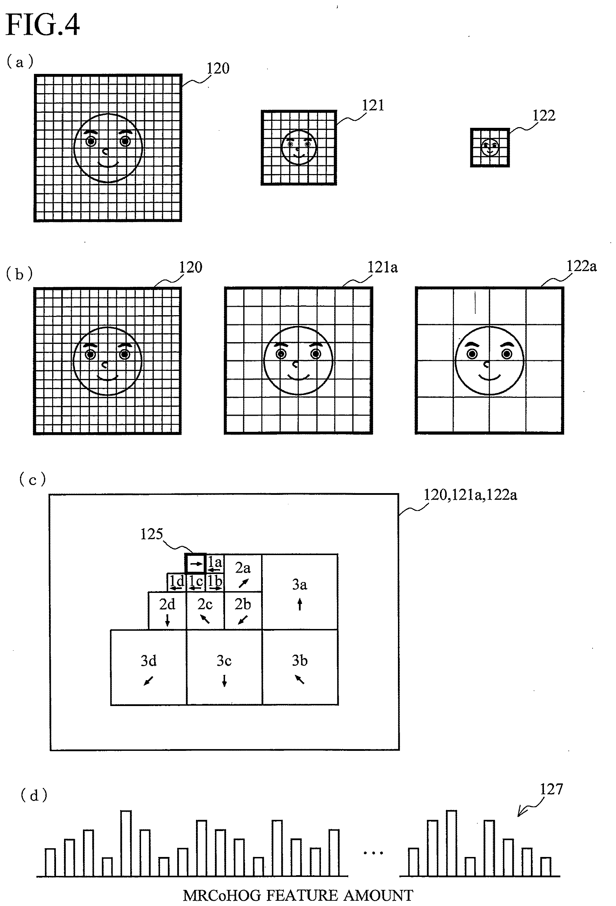

FIGS. 4 are views for illustrating a concept of the MRCoHOG feature amounts.

The MRCoHOG feature amounts greatly reduce the number of offsets by looking at co-occurrences between different resolutions of the same image.

First, as shown in FIG. 4(a), a high-resolution image 120 (an original image), a medium-resolution image 121, and a low-resolution image 122 are obtained by generating images of different resolutions (image sizes) from the original image. Squares in the image represent pixels. Although not shown, cells (which are also referred to as blocks) are also set in these respective resolution images.

Furthermore, the quantized luminance gradient direction is calculated for each pixel in the high-resolution image 120, the medium-resolution image 121, and the low-resolution image 122.

Although the medium-resolution image 121 and the low-resolution image 122 are used for extracting the MRCoHOG feature amounts, for clarity, as shown in FIG. 4(b), the medium-resolution image 121 and the low-resolution image 122 are enlarged to a medium-resolution image 121a and a low-resolution image 122a, so that they have the same size as the high-resolution image 120.

Next, as shown in Fig. 4(c), like the CoHOG feature amounts, the co-occurrences (combinations of the luminance gradient directions) of a luminance gradient direction in a pixel of interest 125 of the high-resolution image 120 and luminance gradient directions of surrounding pixels 1a to 1d of the high-resolution image 120 are taken, and votes are cast for a co-occurrence matrix, which is not shown in the drawing.

Subsequently, votes are cast for the co-occurrence matrix in accordance with co-occurrences of the pixel of interest 125 in the high-resolution image 120 and pixels 2a to 2d in the medium-resolution image 121a on the outer periphery of the pixels 1a to 1d, and votes are cast for the co-occurrence matrix in accordance with co-occurrences of the pixel of interest 125 and pixels 3a to 3d in the low-resolution image 122a on the outer periphery of the pixels 2a to 2d.

In this way, the co-occurrence matrix is obtained for the pixel of interest 125 in the high-resolution image 120, with the co-occurrences in combinations within the high-resolution image 120, with the medium-resolution image 121a, and with the low-resolution image 122a.

This processing is performed to the respective pixels in the cells of the high-resolution image 120 and further to all the cells.

Consequently, a co-occurrence matrix for each pixel in the high-resolution image 120 can be obtained.

Likewise, moreover, a co-occurrence matrix with each resolution image when the pixel of interest is set in the medium-resolution image 121a and a co-occurrence matrix with each resolution image when the pixel of interest is set in the low-resolution image 122a are calculated, and a histogram obtained by arranging the components of all the co-occurrence matrices in a row and normalizing them as shown in Fig. 4(d) is the MRCoHOG feature amounts 127 of the high-resolution image 120.

It is to be noted that, in this example, the MRCoHOG feature amounts are the histogram provided by coupling the co-occurrence matrix when the pixel of interest is set in the high-resolution image 120, the co-occurrence matrix when the pixel of interest is set in the medium-resolution image 121a, and the co-occurrence matrix when the pixel of interest is set in the low-resolution image 122a, but the MRCoHOG feature amounts can be a histogram provided by the co-occurrence matrix in a case where the pixel of interest is set in any one of the images, e.g., the high-resolution image 120.

Additionally, any two of the images may be combined, or the number of resolutions may be increased and co-occurrences may be taken in four or more types of resolution images.

In case of the MRCoHOG feature amounts, the co-occurrence pairs of the luminance gradient directions in the image based on a plurality of resolutions of the same subject become the feature elements, and the histogram thereof becomes the feature amounts.

Experiments have revealed that the MRCoHOG feature amounts allow to reduce the feature amounts significantly compared to CoHOG, while the robustness is higher than CoHOG.

It is speculated that this is due to the fact that noise is reduced by decreasing the resolution and also that the co-occurrences with areas far from the pixel of interest are observed.

The three feature amounts based on the luminance gradient directions are described above and the MRCoHOG feature amounts, which is the best of these three, has been adopted in this embodiment.

Before describing the configuration of the image recognition device 200 in detail below, an application conformation to hardware of a mathematical formula will be described.

To calculate the MRCoHOG feature amount, a square root, division, and an inverse tangent must be calculated.

However, since the computer conducts various kinds of calculations such as a square root by addition, these calculations are very demanding.

Thus, it is necessary to devise a calculation method suitable for the hardware in order to speed up a calculation speed and to make the circuit size appropriate so that it can be formed as an IC chip (an integrated circuit) .

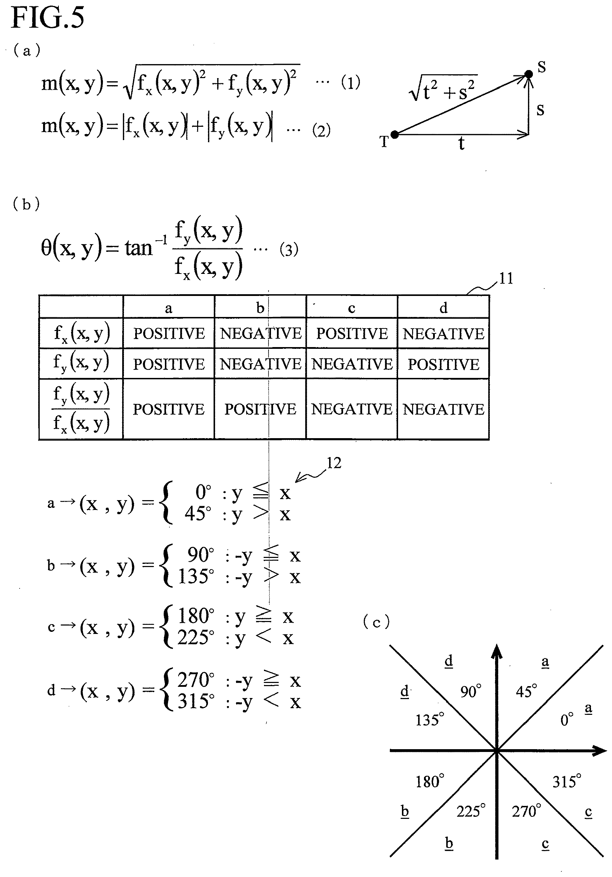

FIGS. 5 are views for illustrating a calculation method used in this embodiment.

m(x, y) in Expression (1) in FIG. 5(a) represents a calculating formula of gradient intensity of the luminance gradient of a pixel present at coordinates (x, y).

It is to be noted that lowercase letters in subscripts are shown in double-byte characters in order to prevent garbled characters.

fx(x, y) and fy(x, y) are gradient intensities of luminance in an x direction (a horizontal direction/a lateral direction) and a y direction (a vertical direction/longitudinal direction), respectively.

Mathematically, fx(x, y) and fy(x, y) are obtained by performing partial differentiation of luminance in the x and y directions but, in this embodiment, fx(x, y) is expressed as a difference in luminance between pixels adjacent to the pixel of interest on both sides thereof in the horizontal direction (a left-and-right lateral direction), and fy(x, y) is expressed as a difference in luminance between pixels adjacent to the pixel of interest on both sides thereof in the vertical direction (an up-and-down longitudinal direction).

As shown in Expression (1), the gradient intensity includes a square root, but Expression (1) is approximated by an additive expression in Expression (2) by replacing an Euclidean distance with a Manhattan distance.

As shown in a right view of FIG. 5(a), this replacement approximates the square root of (t square + s square), which is an Euclidean distance between points TS, by t+s, which is the Manhattan distance. The name "Manhattan" comes from the fact that streets of Manhattan, which is an American city, have a grid pattern.

The gradient intensity is a quantity which increases as a height difference of luminance concerning the luminance gradient rises, and it is used for a zero offset.

For gradient intensities which do not reach a predetermined threshold value, predetermined processing such as not taking co-occurrences is performed, for example, but since the impact on an image identification accuracy is small, the explanation of this processing is omitted in this embodiment.

As a result of experiments, it has been confirmed that an image recognition ability is hardly affected even if the Euclidean distance is replaced with the Manhattan distance.

Expression (3) in FIG. 5(b) represents a calculating formula of a luminance gradient direction θ which is generally used.

Since Expression (3) includes the division of fy(x, y) based on fx(x, y) and the calculation of an inverse tangent (arctangent), a processing burden required for the calculation increases.

Thus, in this embodiment, attention is paid to the fact that what is needed in the calculation of MRCoHOG feature amounts is not exact values according to Expression (3) but quantized luminance gradient directions, and a correspondence table in which pairs of fx(x, y) and fy(x, y) are associated with the luminance gradient directions without using Expression (3), whereby the pairs of fx(x, y) and fy(x, y) are mapped to the quantized luminance gradient directions.

FIG. 5(c) shows a relationship between a range of an angle θ and quantized luminance gradient directions θ.

In this embodiment, as an example, it is assumed that the luminance gradient direction is quantized into eight directions.

Here, as shown in FIG. 5(c), it is assumed that a luminance gradient direction θ 0°≤θ<45° is quantized to 0°, a luminance gradient direction θ 45°≤0<90° is quantized to 45°, other angles are likewise quantized to 90°, 135°, 180°, 225°, 270°, and 315°.

In this technique, first, positive and negative combinations of fx(x, y) and fy(x, y) are classified as a to d in accordance with Classification 11.

Classification a is a case where both fx(x, y) and fy(x, y) are positive, Classification b is a case where both fx(x, y) and fy(x, y) are negative, Classification c is a case where fx(x, y) is positive and fy(x, y) is negative, and Classification d is a case where fx(x, y) is negative and fy(x, y) is positive.

Then, the magnitude of fx(x, y) is compared with that of fy(x, y), and a magnitude relationship is adapted to the quantized luminance gradient directions in accordance with Classification 12.

In Classification a, the magnitude relationship is adapted to 0° when y is not greater than x, and the same is adapted to 45° when y is greater than x.

In Classification b, the magnitude relationship is adapted to 90° when -y is not greater than x, and the same is adapted to 135° when -y is greater than x.

In Classification c, the magnitude relationship is adapted to 180° when y is not smaller than x, and the same is adapted to 225° when y is smaller than x.

In Classification d, the magnitude relationship is adapted to 270° when -y is not smaller than x, and the same is adapted to 315° when -y is smaller than x.

As described above, in this embodiment, making reference to the correspondence table constituted of Classifications 11 and 12 enables obtaining the quantized luminance gradient directions at high speed without using an inverse tangent or division.

As described above, the image processing device according to this embodiment obtains the luminance gradient intensity fx(x, y) in the horizontal direction and the luminance gradient intensity fy(x, y) in the vertical direction of a pixel of interest with the use of luminances of pixels adjacent to the pixel of interest, and outputs the quantized luminance gradient direction by making reference to the correspondence table in which the positive/negative and the magnitude of the luminance gradient intensity in the horizontal direction and in the vertical direction and those of the luminance gradient intensity in the horizontal direction and in the vertical direction are adapted to the quantized gradient directions.

Next, a description will be given on a configuration of the image recognition device 200.

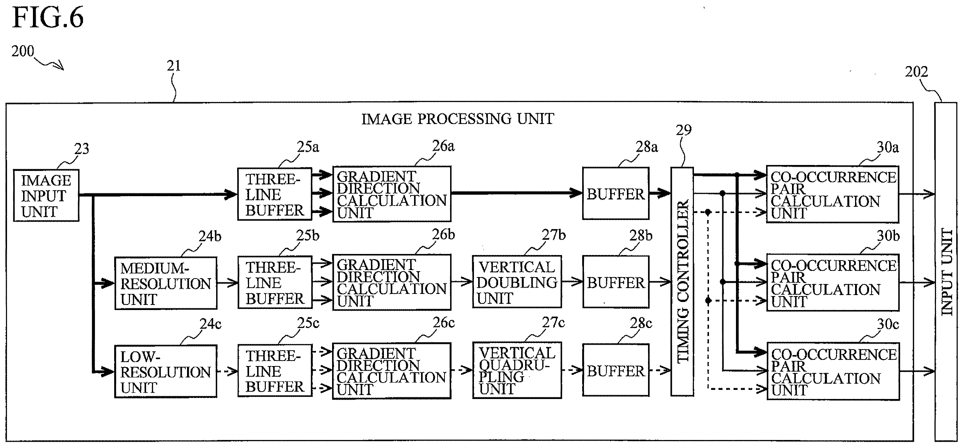

FIG. 6 is a view showing a circuit configuration of the feature extraction unit 21 constituting the image recognition device 200.

An image input unit 23 sequentially outputs luminance of images in frames transmitted from a video camera based on a pixel order (an order in which the pixels are arranged in the image).

To calculate the MRCoHOG feature amount, the luminance of each pixel constituting an image can suffice. Thus, the image recognition device 200 utilizes y (the luminance) of a pixel in an image formed in a YUYV form as a pixel value.

Here, the luminance extracted from an image beforehand may be input to the image input unit 23, or the image input unit 23 may extract the luminance from an image.

In this embodiment, as an example, the former, i.e., luminance data Y is extracted from an image in the YUYV format in advance, and this is input to the image input unit 23 as an image.

In this manner, the image input unit 23 functions as image acquiring means for acquiring images and pixel value acquiring means for acquiring the luminance as a pixel value of a pixel in an image.

In the following, luminance data of a pixel in an i-th line and a j-th column in an image or a luminance gradient direction described below will be represented by a line number and a column number of a corresponding pixel, such as (i-j).

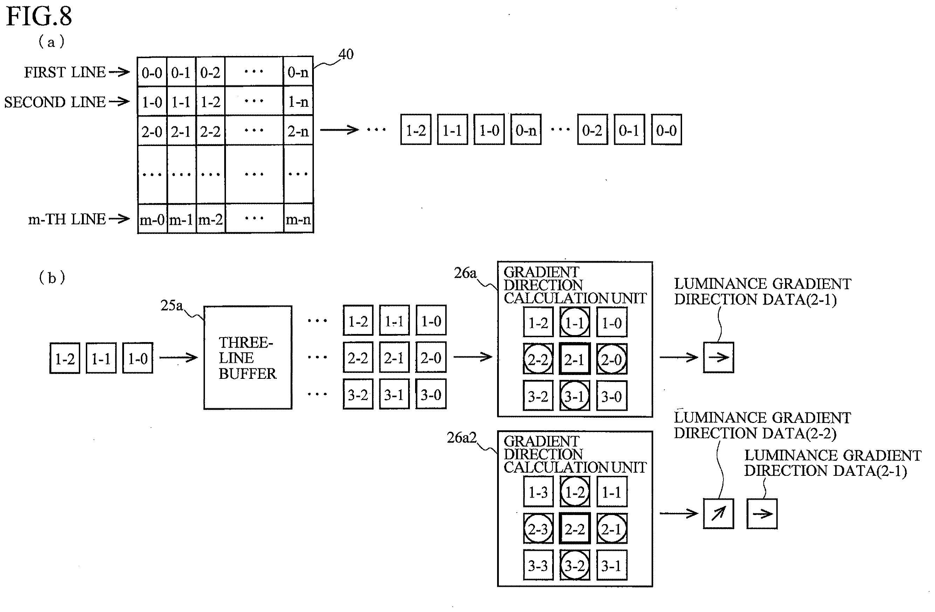

As shown in FIG. 8(a), an image 40 is constituted of the luminance data in the first line (0-0), (0-1), (0-2), ..., (0-n), the luminance data in the second line (1-0), (1-1), (1-2), ..., ..., (1-n), and the luminance data in a m-th line (m-0), (m-1), (m-2), ..., (m-n).

The image input unit 23 sequentially reads out the luminance data from the image 40 transmitted from the video camera in the right direction from the upper line, and outputs the luminance data (0-0), (0-1), (0-2), ..., (0-n), (1-0), (1-1), ... in the mentioned order.

Again referring to FIG. 6, output lines of the image input unit 23 are wired to a three-line buffer 25a, a medium-resolution unit 24b, and a low-resolution unit 24c, and the luminance data output by the image input unit 23 is simultaneously output to each of the three lines buffer 25a, the medium-resolution unit 24b, and the low-resolution unit 24c.

It is to be noted that, in FIG. 6, the wiring of high-resolution luminance data is shown with thick arrows, the wiring of medium-resolution luminance data is shown with thin arrows, and the wiring of low-resolution luminance data is shown with dotted lines.

The medium-resolution unit 24b and the low-resolution unit 24c are resolution conversion circuits which convert the resolution (a size) of the image 40 to 1/2 and 1/4, respectively.

Images with resolutions of 1/2 and 1/4 are generated from the image 40 by these resolution conversion circuits.

It is to be noted that the image 40 is also used as a high-resolution image without converting the resolution.

As methods for converting (resizing) the resolution, there are nearest neighbor interpolation, bilinear interpolation, bicubic interpolation, and the like.

The nearest neighbor interpolation is a method of extracting a pixel before resizing and using it as it is, the bilinear interpolation is a method of weighted-averaging a 2x2 area centered on a target pixel, and the bicubic interpolation is a method of interpolating a 4x4 area centered on the target pixel by a cubic function.

In the feature extraction unit 21, calculations are simple, and the nearest neighbor interpolation which enhances a detection accuracy is adopted.

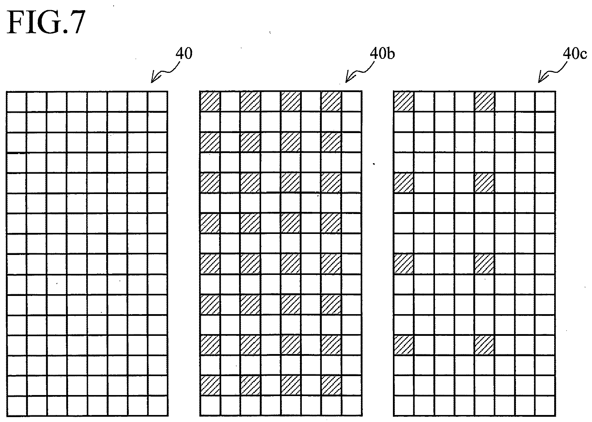

FIG. 7 is a view for illustrating resolution conversion processing by the medium-resolution unit 24b, and the low-resolution unit 24c.

As shown in an image 40b, the medium-resolution unit 24b reads the luminance data in the image 40 transmitted by the image input unit 23 at a frequency of every other luminance data indicated by shaded lines, and skips the other luminance data, thereby generating image data with a 1/2 resolution in which every other luminance data is present in the vertical direction/horizontal direction.

As shown in an image 40c, the low-resolution unit 24c reads the luminance data in the image 40 transmitted by the image input unit 23 at a frequency of every three luminance data indicated by shaded lines, and skips the other luminance data, thereby generating image data with a 1/4 resolution in which every three luminance data is present in the vertical direction/horizontal direction.

When the luminance data is thinned in this manner, the medium-resolution unit 24b generates/outputs a medium-resolution image with the resolution reduced to 1/2, and the low-resolution unit 24c generates/outputs a low-resolution image with the resolution reduced to 1/4.

Since the nearest neighbor interpolation is adopted, the resolution can be changed by simple processing with a small calculation burden which is skipping unnecessary data and gleaning necessary data.

Again referring to FIG. 6, the three-line buffer 25a is a circuit which stores luminance data of a high-resolution image and outputs the luminance data for three lines in parallel to a gradient direction calculation unit 26a.

The gradient direction calculation unit 26a is a circuit which outputs luminance gradient direction data indicative of a luminance gradient direction of a pixel of interest in the high-resolution image with the use of the luminance data for the three lines.

A three-line buffer 25b is a circuit which stores luminance data of a medium-resolution image and outputs the luminance data for three lines in parallel to a gradient direction calculation unit 26b.

The gradient direction calculation unit 26b is a circuit which outputs luminance gradient direction data indicative of a luminance gradient direction of a pixel of interest in the medium-resolution image with the use of the luminance data for the three lines.

A three-line buffer 25c is a circuit which stores luminance data of a low-resolution image and outputs the luminance data for three lines in parallel to a gradient direction calculation unit 26c.

The gradient direction calculation unit 26c is a circuit which outputs luminance gradient direction data indicative of a luminance gradient direction of a pixel of interest in the low-resolution image with the use of the luminance data for the three lines.

FIGS. 8 are views for illustrating detailed operations of the three-line buffer 25a and the gradient direction calculation unit 26a.

As described above with reference to FIG. 8(a), the image input unit 23 outputs the luminance data (0-0), (0-1), ... of the image 40 as the high-resolution image.

As shown in FIG. 8(b), the three-line buffer 25a stores the luminance data for three lines in accordance with each line and outputs them for three lines in parallel to the gradient direction calculation unit 26a. The example of FIG. 8(b) represents a case the luminance data (1-0), (1-1), (1-2), ... in the second line of the image 40, the luminance data (2-0), (2-1), (2-2), ... in the third line, and the luminance data (3-0), (3-1), (3-2), ... in the fourth line are output to the gradient direction calculation unit 26a in parallel while aligning the line of pixels.

The gradient direction calculation unit 26a accepts the input of the luminance data for the three lines output in parallel, and outputs quantized luminance gradient directions.

As shown in FIG. 8, the gradient direction calculation unit 26a is provided with an array of storage elements with three lines and three columns, and takes in luminance data for three lines and three columns in synchronization with outputs of the three-line buffer 25a, and reads the luminance by these luminance data.

As shown in the drawing, the gradient direction calculation unit 26 sets central luminance data in the luminance data of three lines and three columns as a pixel of interest. In the example shown in the drawing, luminance data (2-1) enclosed in a thick rectangle is the luminance data of the pixel of interest.

Further, the gradient direction calculation unit 26a calculates the luminance gradient intensity fx(x, y) in the horizontal direction from differences in luminance between the pixel of interest and luminance data (2-2) and (2-0) horizontally adjacent thereto, and calculates the luminance gradient intensity fy(x, y) in the vertical direction from differences in luminance between the pixel of interest and luminance data (1-1) and (3-1) vertically adjacent thereto.

After calculating fx(x, y) and fy(x, y), the gradient direction calculation unit 26a substitutes them in Expression (2) in FIG. 5 to acquire m(x, y), and executes predetermined processing if m(x, y) is yet to reach a threshold value.

If m(x, y) has reached the threshold value, the correspondence table is referred to for fx(x, y) and fy(x, y), and outputs the luminance gradient direction data (2-1) indicative of a quantized luminance gradient directions of the pixel.

In this manner, the luminance gradient direction data is generated in correspondence with the pixel in the same manner as the luminance data.

In the next clock, the processing moves to a subsequent column of the luminance data is moved, and the next luminance data (2-2) becomes the pixel of interest, as shown in the gradient direction calculation unit 26a2, and the luminance gradient direction data (2-2) is output.

In this manner, the gradient direction calculation unit 26a sequentially outputs the luminance gradient direction data in accordance with each clock.

Moreover, when the last column is reached, the processing advances to a subsequent line, and the gradient direction calculation unit 26a outputs luminance gradient direction data in which luminance data in the subsequent line is determined as the pixel of interest.

Likewise, the three-line buffer 25b and the gradient direction calculation unit 26b output the luminance gradient direction data of a medium-resolution image, and the three-line buffer 25c and the gradient direction calculation unit 26c output the luminance gradient direction data of a low-resolution image.

In this way, in the array of three lines and three columns of the storage elements arranged in the gradient direction calculation unit 26a, a position of the pixel of interest is made to correspond to positions of adjacent pixels and, in the luminance data sequentially transmitted in accordance with each clock, the luminance data of the pixel of interest and the luminance data of the adjacent pixels are sequentially identified using this correspondence of the positions.

The order of passing through these positions of the pixel of interest or of the adjacent pixels is determined by the order in which the image input unit 23 has output the luminance data.

This is logically the same as setting up a window for the pixel of interest and a window for the adjacent pixels on a path of the luminance data which is sequentially transmitted in a bucket brigade manner, and identifying the luminance data of the pixel of interest and the luminance data of the adjacent pixels by observing them through these windows.

Again referring to FIG. 6, a vertical doubling unit 27b and a vertical quadrupling unit 27c are circuits which stretch the luminance gradient direction data in the vertical direction twice and four times for a medium-resolution image and a low-resolution image, respectively.

This processing is configured to adjust the timing when co-occurrences are later read by a co-occurrence pair calculation unit 30a or the like.

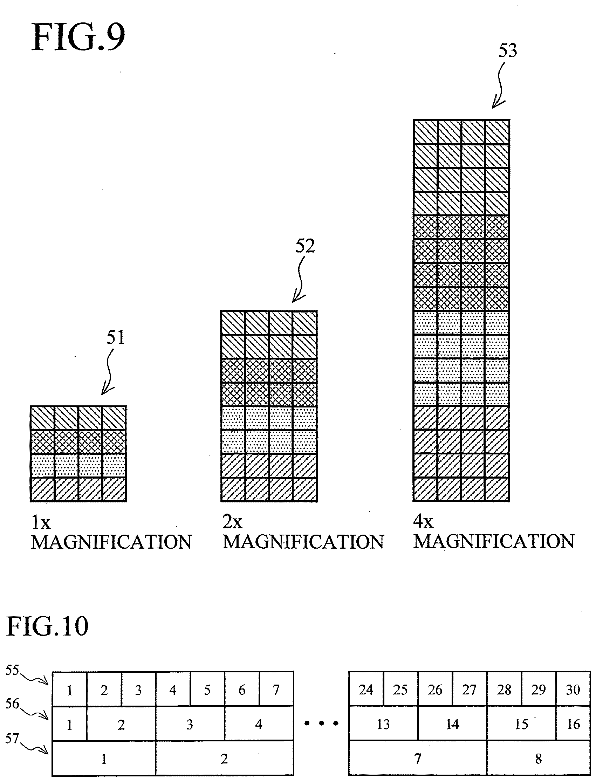

FIG. 9 is a view for illustrating vertical direction of data stretching processing.

Data 51 shows a configuration of the luminance gradient direction data before data stretching. Each of squares represents each luminance gradient direction data, and they are aligned in the order of corresponding pixels.

If each line of the data 51 is duplicated and arranged adjacent to the original line, data 52 vertically stretched twice and data 53 vertically stretched four times are acquired.

With this technique, the vertical doubling unit 27b duplicates the luminance gradient direction data of a medium-resolution image output from the gradient direction calculation unit 26b in accordance with each line and stretches it twice in the vertical direction (the perpendicular direction).

Additionally, the vertical quadrupling unit 27c duplicates the luminance gradient direction data of a low-resolution image output from the gradient direction calculation unit 26c in accordance with each line and stretches it four times in the vertical direction.

Again referring to FIG. 6, buffers 28a, 28b, and 28c are buffers which temporarily stores the luminance gradient direction data of a high-resolution image, the luminance gradient direction data of a medium-resolution image, and the luminance gradient direction data of a low-resolution image output from the gradient direction calculation unit 26a, the vertical doubling unit 27b, and the vertical quadrupling unit 27c, respectively.

A timing controller 29 is a control circuit which controls the timing for transmitting the luminance gradient direction data of a high-resolution image, a medium-resolution image, and a low-resolution image to co-occurrence pair calculation units 30a, 30b, and 30c.

The timing controller 29 stands by until the luminance gradient direction data of these respective resolution images are aligned in the buffers 28a, 28b, and 28c, and outputs them when they are aligned.

Consequently, the output timing for each of the resolution images which has been shifted due to a change in resolution can be uniformed.

The luminance gradient direction data of each resolution image is output from each of different wiring lines, such as thick lines in the drawing for the luminance gradient direction data of a high-resolution image, thin lines in the drawing for the luminance gradient direction data of a medium-resolution image, and dotted lines in the drawing for the luminance gradient direction data of a low-resolution image.

These wiring lines are connected to the co-occurrence pair calculation units 30a, 30b, and 30c respectively, whereby the luminance gradient direction data for the respective resolution images are transmitted to the co-occurrence pair calculation units 30a, 30b, and 30c.

Further, the timing controller 29 stretches the luminance gradient direction data of a medium-resolution image and a low-resolution image twice and four times in the horizontal (lateral) direction, respectively, in order to uniform the timing at which the co-occurrence pair calculation units 30a, 30b, and 30c take co-occurrences.

FIG. 10 is a view for illustrating horizontal direction of data stretching processing.

Data columns 55, 56, and 57 represent the timing at which the timing controller 29 outputs the luminance gradient direction data of a high-resolution image, a medium-resolution image, and a low-resolution image, respectively.

For example, as indicated by the data column 55, the timing controller 29 sequentially outputs the first data to the 30th data once for the luminance gradient direction data of a high-resolution image.

In contrast, for the luminance gradient direction data of a medium-resolution image, the first data is output once, the second data to the fifteenth data are output twice each, and the sixteenth data is output once, as indicated by the data column 56, in accordance with the output timing of the luminance gradient direction data of a high-resolution image.

Further, for the luminance gradient direction data of a low-resolution image, the first data is output three times, the second data to the seventh data are output four times each, and the eighth data is output three times, as indicated by the data column 57, in accordance with the output timing of the luminance gradient direction data of the high-resolution image.

It is to be noted that the reason why the number of outputs at the beginning and at the end of the data column 56 and the data column 57 are not twice each and four times each, respectively is to adjust them to the same width as the data column 55.

Consequently, the luminance gradient direction data of the medium-resolution image and the low-resolution image are stretched twice and four times in the horizontal direction, respectively.

Again referring to FIG. 6, the co-occurrence pair calculation units 30a, 30b, and 30c are circuits which output co-occurrence pairs to the input unit 202 with the use of the luminance gradient direction data output from the timing controller 29, respectively.

The co-occurrence pair calculation units 30a, 30b, and 30c create and output co-occurrence pairs with pixels in a high-resolution image, a medium-resolution image, and a low-resolution image set as pixels of interest, respectively.

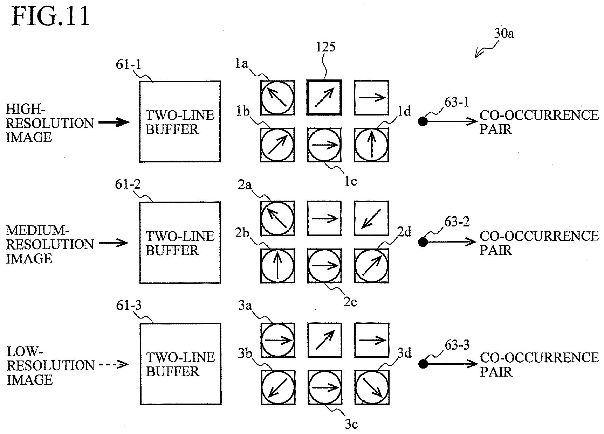

FIG. 11 is a view for illustrating a mechanism of how the co-occurrence pair calculation unit 30a calculates co-occurrence pairs.

The co-occurrence pair calculation unit 30a includes a two-line buffer 61-1 for a high-resolution image, a two-line buffer 61-2 for a medium-resolution image, and a two-line buffer 61-3 for a low-resolution image, which store the luminance gradient direction data (luminance gradient directions) transmitted from the timing controller 29 over two lines in accordance with each resolution.

Furthermore, the two-line buffers 61-1 to 61-3 output co-occurrence pairs from output units 63-1 to 63-3, respectively, in the following manner.

It is to be noted that the two-line buffers 61-1, 61-2, ... are simply referred to as two-line buffer 61 hereinafter when no special distinction is made. The same is applied to other constituent elements.

On the right side of the two-line buffers 61-1, 61-2, and 61-3, the arrangement of the luminance gradient direction data stored in the respective two-line buffers 61-1, 61-2, and 61-3 are shown, respectively.

Signs indicative of positions of the luminance gradient direction data are made to correspond to the signs of the positions in FIG. 4(c) (the luminance gradient directions are not made to correspond). Additionally, the luminance gradient direction data corresponding to the pixel of interest is enclosed in a thick rectangle, and the luminance gradient direction data of the other pixel to be combined with it for voting is enclosed in a circle.

As shown in the drawing, in each of the two-line buffers 61-1, 61-2, and 61-3, two lines and three columns of the luminance gradient direction data of a high-resolution image, a medium-resolution image, or a low-resolution image are arranged.

To arrange the luminance data in the output order from the image input unit 23, the arrangement of the two-line buffers 61-1, 61-2, and 61-3 are reversed in left and right from FIG. 4(c).

First, the co-occurrence pair calculation unit 30a sequentially outputs co-occurrence pairs based on combinations of the luminance gradient direction data of a pixel of interest 125 and the luminance gradient direction data of pixels 1a to 1d from the output unit 63-1 in synchronization with clocks.

Further, the co-occurrence pair calculation unit 30a sequentially outputs co-occurrence pairs based on combinations of the luminance gradient direction data of the pixel of interest 125 and the luminance gradient direction data of pixels 2a to 2d from the output unit 63-2 in synchronization with clocks, and sequentially outputs co-occurrence pairs based on combinations of the luminance gradient direction data of the pixel of interest 125 and the luminance gradient direction data of pixels 3a to 3d from the output unit 63-3 in synchronization with clocks.

Upon completing the output of the co-occurrence pairs concerning the pixel of interest 125, the co-occurrence pair calculation unit 30a proceeds to a subsequent column of luminance gradient direction data stored in each of the two-line buffers 61-1, 61-2, and 61-3.

Consequently, the co-occurrence pair calculation unit 30a arranges the luminance gradient direction data corresponding to the pixel 1a at a position of the pixel of interest 125, and sequentially performs creation and output of co-occurrence pairs using this.

The co-occurrence pair calculation unit 30a creates and sequentially outputs co-occurrence pairs for each pixel in a high-resolution image by repeating the above-described operation.

Again reference to FIG. 6, like the co-occurrence pair calculation unit 30a, the co-occurrence pair calculation units 30b and 30c sequentially output co-occurrence pairs in a case where a pixel in a medium-resolution image is set as the pixel of interest and co-occurrence pairs in a case where a pixel in a low-resolution image is set as the pixel of interest, respectively.

The feature extraction unit 21 is constituted as described above, and the respective circuits simultaneously operate in synchronization with clocks, sequentially execute the processing in an assembly-line manner, and process images output from the video camera in real time, thereby creating co-occurrence pairs of the luminance gradient directions across the plurality of resolutions from the image data and sequentially outputting them.

As described above, the feature extraction unit 21 functions as feature element acquiring means for sequentially acquiring respective feature elements of feature amounts representing features of a subject from pixel values.

This feature element is based on the luminance gradient directions, especially the co-occurrences of the luminance gradient directions, and further based on the co-occurrences of the luminance gradient directions across images with different resolutions.

Next, a description will be given on the input unit 202 and the recognition unit 201 constituting the image recognition device 200.

Whereas in the conventional technology, these co-occurrence pairs were voted in co-occurrence matrices of the respective resolutions and then connected to create a histogram in the memory, thereby creating MRCoHOG feature amounts before conducting voting in a BNN (Binarized Neural Networks), the image recognition device 200 exerts the effect which is the same as creating a histogram by voting the co-occurrence pairs directly from the input unit 202 to the BNN of the recognition unit 201 without creating a histogram.

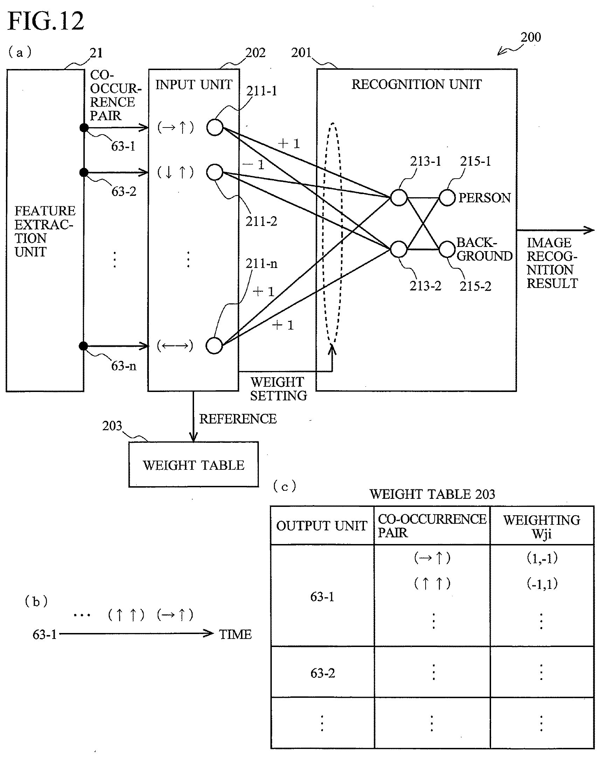

Each view of FIG. 12 is a view for illustrating a configuration of the input unit 202 and the recognition unit 201.

As shown in FIG. 12(a), the input unit 202 includes an input layer consisting of input nodes 211-1, 211-2, ..., and they sequentially accept inputs of co-occurrence pairs sequentially output from output units 63-1, 63-2, ..., 63-n in synchronization with clocks.

In more detail, as shown in FIG. 12(b), the output unit 63-1 sequentially outputs various kinds of extracted co-occurrence pairs in synchronization with clocks such as (↑→), (↓←), ..., and the input node 211-1 sequentially accepts these inputs in synchronization with clocks.

Furthermore, the input unit 202 refers to the weight table 203, sets the weighting of a connecting portion between the input node 211-1 and respective nodes constituting an intermediate layer, i.e., intermediate nodes 213-1 and 213-2, casts a vote (1 or -1) for the intermediate nodes 213-1 and 213-2 based on the weighting.

The same is applied to the other output units 63-2, 63-3, ... or the input nodes 211-2, 211-3, ....

As shown in FIG. 12(c), the weight table 203 stores the correspondence between the co-occurrence pairs and the weightings for the respective output units 63. These weightings are acquired by learning and are binarized into one of two values which are 1 and -1.

The input unit 202 sequentially sets the weightings of the connecting portion between the nodes in correspondence with the co-occurrence pairs input from the output units 63 while making reference to the weight table 203, whereby the intermediate nodes 213 is allowed to exert the effect which is the same as casting votes for a histogram based on the co-occurrence pairs.

As described above, the input unit 202 functions as input value acquiring means for sequentially acquiring input values corresponding to feature elements by using the weightings learned for an image recognition target in advance.

Again referring to FIG. 12(a), the recognition unit 201 includes the intermediate layer consisting of the intermediate nodes 213-1 and 213-2 and the output layer consisting of output nodes 215-1 and 215-2 and, together with the input layer of the input unit 202, they constitute a three-layer BNN.

It is to be noted that this is an example, and more layers can be added to the intermediate layer, or the number of the nodes in the intermediate layer or the output layer can be increased or decreased. Even when there was only one intermediate layer and one node, it was still possible to identify them in experiments.

Moreover, in the image recognition device 200, the input unit 202 is provided, and the input layer is arranged, but the feature extraction unit 21 may be directly coupled with the recognition unit 201, and the output unit 63 may have a weight setting function based on the weight table 203.

Additionally, in place of the BNN, a general neural network can be used.

The thus constituted recognition unit 201 identifies feature amount by the BNN, i.e., the binarized neural network.

In the recognition unit 201, the BNN is used since a hardware circuit has a large area due to execution of multiplications and the like in the neural network using a general floating decimal point, and the implementation in a semiconductor device is difficult.

As will be described later, since the BNN can be constituted using the weights which are two values, 1 and - 1, and an adder, a counter, and the like, a circuit area is, e.g., approximately 1/100th of that using a floating decimal point, thus making it easy to implement in hardware and reducing power consumption. Additionally, the BNN exerts the enough identification performance to withstand practical use irrespective of a small-scale circuit configuration.

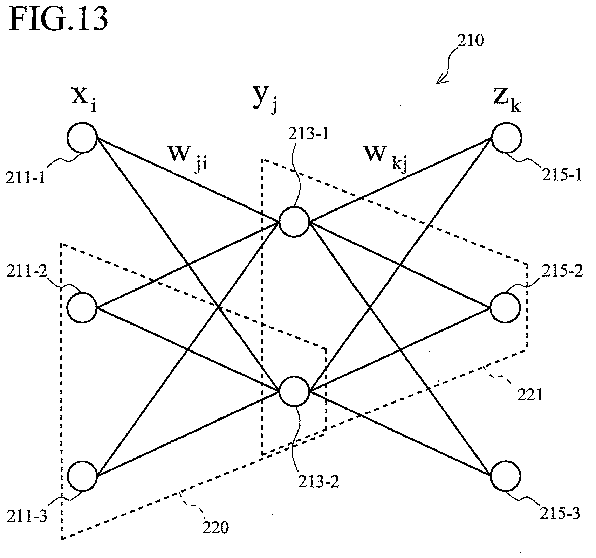

FIG. 13 is a view for illustrating a mechanism of the BNN.

The BNN 210 has an input layer consisting of input nodes 211-i (i=1, 2, 3), an intermediate layer (a hidden layer) consisting of intermediate nodes 213-j (j=1, 2) constituting a hidden unit, and an output layer consisting of output nodes 215-k (k=1, 2, 3).

It is to be noted that, in the image recognition device 200, the input layer is formed in the input unit 202, and the intermediate layer and the output layer are formed in the recognition unit 201 as described above.

These nodes are calculation units (perceptron) constituting nodes of the neural network, and the neural network is formed by coupling all the respective nodes between the respective layers.

For an output from the input node 211-i to the intermediate node 213-j, a weighting Wji of the calculation which takes any one of two values {-1, 1} is set.

In case of the image recognition device 200, the input unit 202 sequentially and dynamically sets Wji while synchronizing with clocks in accordance with co-occurrence pairs by referring to the weight table 203.

For an output from the intermediate node 213-j to the output node 215-k, a weighting Wkj of the calculation decided by learning which takes any one of two values {-1, 1} is set. Wkj is a fixed value.

It is to be noted that i, j, and k are shown as subscripts in the drawing, but in the specification, they are shown in the normal size to prevent garbled characters. The same is applied to other elements.

Further, in the drawing, the variables x, y, z, and w are written in lowercase letters, but in the specification, they are written in uppercase letters X, Y, Z, and W to improve the visibility of the variables and subscripts.

An input Xi to the input node 211-i is a vote cast for the input unit 202 by the feature extraction unit 21, and it becomes 1 every time the feature extraction unit 21 outputs a co-occurrence pair.

Whether this one vote is added to or subtracted from the intermediate node 213-1, or whether it is added to or subtracted from the intermediate node 213-2, is determined by Wji set by the input unit 202.

An activation function of intermediate nodes 213 is binarized to {-1, 1}, and an output Yj of the intermediate node 213-j takes any one of the two values {-1, 1}.

The output node 215-k sums up outputs from the intermediate nodes 213, and outputs its signs as two values {-1, 1}.

An output Zk from the output node 215-k corresponds to a k-th identification target. For example, the output node 215-1 corresponds to a person, and it outputs Z1=1 when a person has been identified and outputs Z1=-1 when no person has been detected. The same is true for the other output nodes 215.

In the image recognition device 200, the output node 215-2 corresponds to a background, and the output node 215-3 has no background provided thereto, but it can be configured to correspond to other recognition targets such as a traffic light.

These operations will now be described hereinafter.

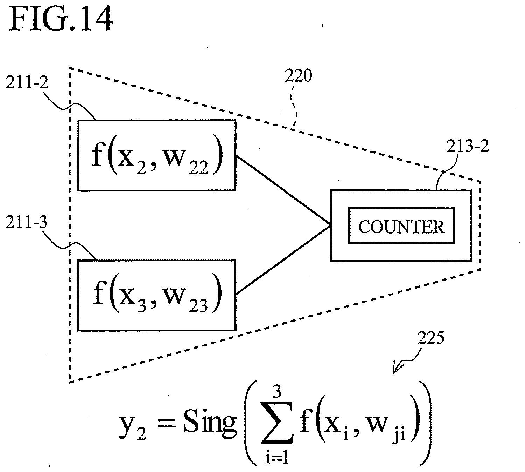

FIG. 14 is a view showing a portion 220 (a part of the input layer and the intermediate layer) in FIG. 13.

The input node 211-i performs an operation f(Xi, Wji) based on Wji on the input Xi (=1) and outputs it to the intermediate node 213-j. This operation uniforms a sign of Xi with a sign of Wji, and f(Xi, Wji)=Xi=1 is achieved if Wji is 1, and f(Xi, Wji)=-Xi=-1 is achieved if Wji is -1.

In the example of the drawing, the input nodes 211-2 and 211-3 calculate f(X2, W22) and f(X3, W23) and output them to the intermediate node 213-2, respectively.

The input nodes 211 sequentially perform to the operation Xi input from the output unit 63 in sequence, and sequentially output them to the intermediate node 213.

The intermediate node 213 includes a counter, inputs each vote (1 or -1) sequentially in to the counter from the input nodes 211, and sequentially stores their total values. That is, every time a value is input from the input nodes 211, the input value is added to a total value in accordance with Expression 225, and the total value is sequentially updated.

Furthermore, the intermediate node 213 outputs Yj=1 if the total value stored in the counter is not less than 0 and outputs Yj=-1 otherwise, thereby sequentially outputting their signs.

The intermediate node 213 continues to store the total value and update the output until the processing of an image input to the image input unit 23 is completed, and returns to an initial value and repeats the same processing when the next image is processed.

In this manner, the intermediate layer functions as an addition layer consisting of addition nodes which sequentially accept network input of input values, sequentially add the accepted input values in accordance with to Expression 225 (FIG. 14), sequentially store them, and sequentially output values corresponding to the stored added values.

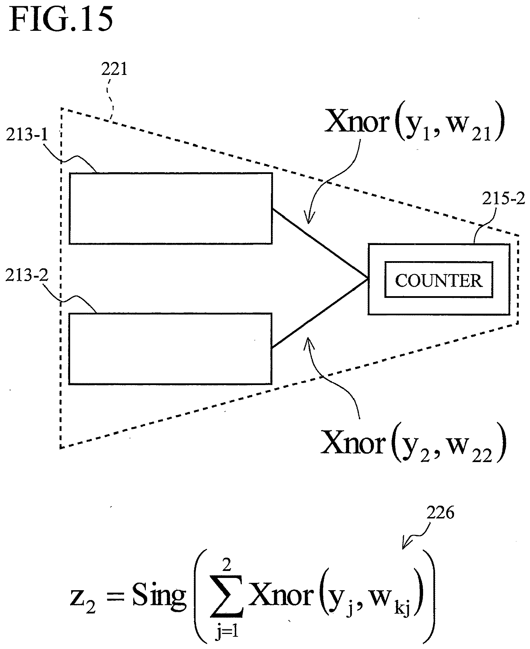

FIG. 15 is a view showing a portion 221 (a part of the intermediate layer and the output layer) in FIG. 13.

Yj output from the intermediate node 213-j is weighted in accordance with the weighting Wkj of the intermediate layer and the output layer, and input to the output node 215-k.

This processing is performed by the intermediate node 213-j taking an exclusive NOR of Yj and Wkj in accordance with Xnor(Yj, Wkj), and sequentially outputting its result to the output node 215-k in synchronization with clocks.

For example, the intermediate node 213-j outputs 1 to the output node 215-k if (Yj, Wkj) is (1, 1) and (-1, -1), and outputs -1 otherwise.

On the other hand, the output node 215-k also includes a counter, which stores binary values transmitted from each intermediate node 213 while sequentially adding them in accordance with Expression 226 (FIG. 15), and sequentially outputs Zk=1 if the stored value is 0 or more, and outputs Zk=-1 otherwise, thereby output its sign.

The output node 215 continues to store the total value and update the output (i.e., the image recognition result) until the processing of an image input to the image input unit 23 is completed, and returns to an initial value and repeats the same processing when the next image is processed.

In this manner, the output layer functions as image recognition result outputting means which is network-connected with the addition node (the intermediate node 213) using the weighting learned for an image recognition target in advance, sequentially accepts the network input of values output by the addition layer (the intermediate layer), sequentially stores a total value of the accepted values, and outputs an image recognition result corresponding to the stored total value.

Again referring to FIG. 12(a), when the feature extraction unit 21 starts inputting co-occurrence pairs to the input unit 202, the intermediate nodes 213 and the output nodes 215 also output values sequentially in synchronization with this.

Consequently, histogram-equivalent values are formed in the intermediate nodes 213, but since this is still in the process of being completed at the beginning, values in the output nodes 215 may be a person or a background.

Furthermore, when all the co-occurrence pairs of an image have been processed, the output of each output node 215 is determined, and if it is recognized as a person, the output node 215-1 is 1 and the output node 215-2 is -1, and if it is recognized as a background, the output node 215-2 is 1 and the output node 215-1 is -1.

In this manner, the image recognition result acquiring means acquires a total value corresponding to all feature elements of feature amounts, and then fixes an image recognition result.

Moreover, when the processing of co-occurrence pairs proceeds to some extent, the outputs of the output nodes 215 are nearly fixed. Thus, if predetermined conditions are met, for example, if the same image recognition result has been output for a predetermined number of consecutive times, it is possible to adopt a configuration which outputs it as an image recognition result.

In this case, image recognition result outputting means sequentially updates the image recognition result corresponding to the total value stored in the output layer in connection with the update of the storage, and outputs the image recognition result if the updated image recognition result is the same for a predetermined number of consecutive times.

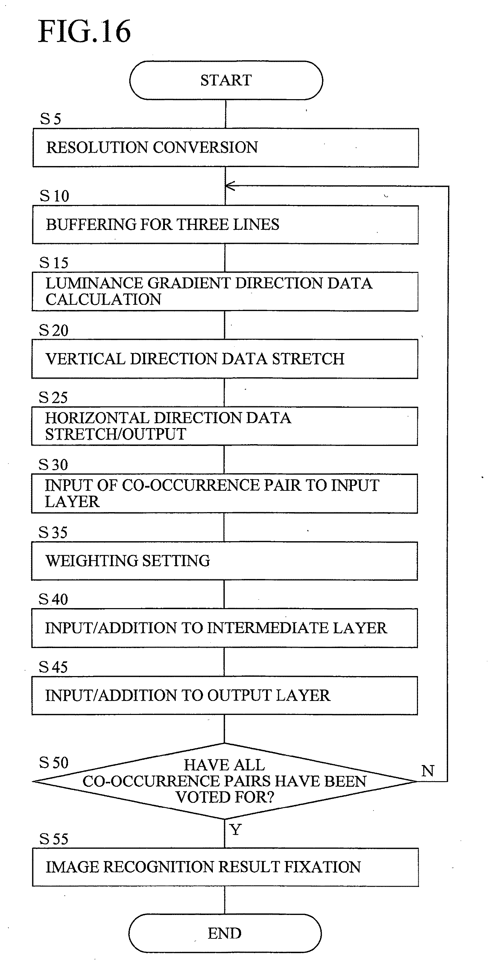

FIG. 16 is a flowchart for illustrating an image processing procedure performed by the image recognition device 200.

It is to be noted that the image recognition device 200 performs each processing in the following steps 5 to 45 in synchronization with clocks.

First, the image input unit 23 outputs luminance data of an image 40, and the medium-resolution unit 24b and the low-resolution unit 24c output luminance data with resolutions converted to a medium-resolution and a low-resolution (Step 5).

Further, the three-line buffers 25a, 25b, and 25c buffer the luminance data of a high-resolution image, a medium-resolution image, and a low-resolution image for three lines, respectively (Step 10).

Then, the gradient direction calculation units 26a, 26b, and 26c calculate luminance gradient directions of pixels in the high-resolution image, the medium-resolution image, and the low-resolution image and output luminance gradient direction data, respectively (Step 15).

Subsequently, the vertical doubling unit 27b and the vertical quadrupling unit 27c stretch the luminance gradient direction data of the medium-resolution image and the low-resolution image in the vertical direction twice and four times, respectively (Step 20).

The luminance gradient direction data of the high-resolution image, the luminance gradient direction data of the medium-resolution image vertically stretched doubly, and the luminance gradient direction data of the low-resolution image vertically stretched quadrupling are buffed by the buffers 28a, 28b, and 28c, respectively.

Then, the timing controller 29 uniforms the timing and outputs the luminance gradient direction data of the respective resolutions.

The timing controller 29 stretches the luminance gradient direction data of the medium-resolution image and the low-resolution image twice and four times in the horizontal (lateral) direction and outputs them, respectively (Step 25).

Subsequently, the co-occurrence pair calculation units 30a, 30b, and 30c generate co-occurrence pairs with the use of the luminance gradient direction data of the respective resolutions output from the timing controller 29 and input them to the input layer of the input unit 202 from the output units 63 (Step 30).

Then, the input unit 202 acquires the weighting Wji corresponding to the co-occurrence pairs by making reference to the weight table 203, and uses this to vote for the intermediate layer (Step 35).

In contrast, the intermediate layer accepts the input from the input layer, adds a current input value to a previous total value, stores a total value after the addition, and outputs a value corresponding to the total value after the addition to the output layer (Step 40).

The output layer accepts the input from the intermediate layer, adds a current input value to a previous total value, and stores a total value after the addition (Step 45).

Furthermore, if there are co-occurrence pairs which are not yet to be voted for (Step 50; N), the image recognition device 200 continues the processing from Step 10 to Step 45, and if all the co-occurrence pairs have been voted for (Step 50; Y), an image recognition result of the output layer is fixed and output (Step 55).

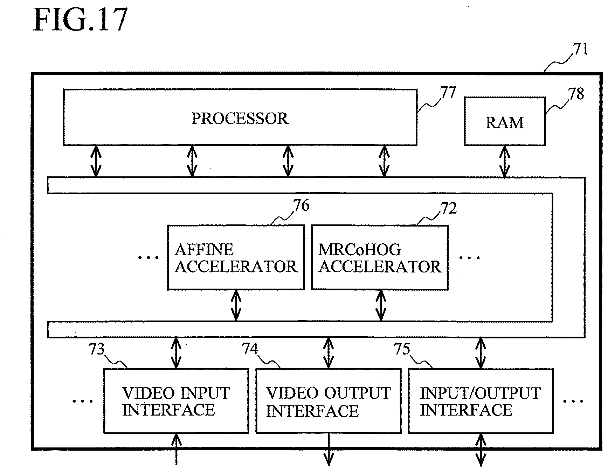

FIG. 17 is a view showing an example constituting a semiconductor device with the use of the image recognition device 200.

The semiconductor device 71 is constituted of, e.g., an IC chip, and has a processor 77, a RAM 78, a MRCoHOG accelerator 72, an affine accelerator 76, a video input interface 73, a video output interface 74, an input/output interface 75, and the like formed therein.

The MRCoHOG accelerator 72 has a circuit configuration of the image recognition device 200 incorporated therein, accepts the input of video data from the video input interface 73, generates co-occurrence pairs from a frame image to perform the image recognition, and outputs its result.

### (First Modification)

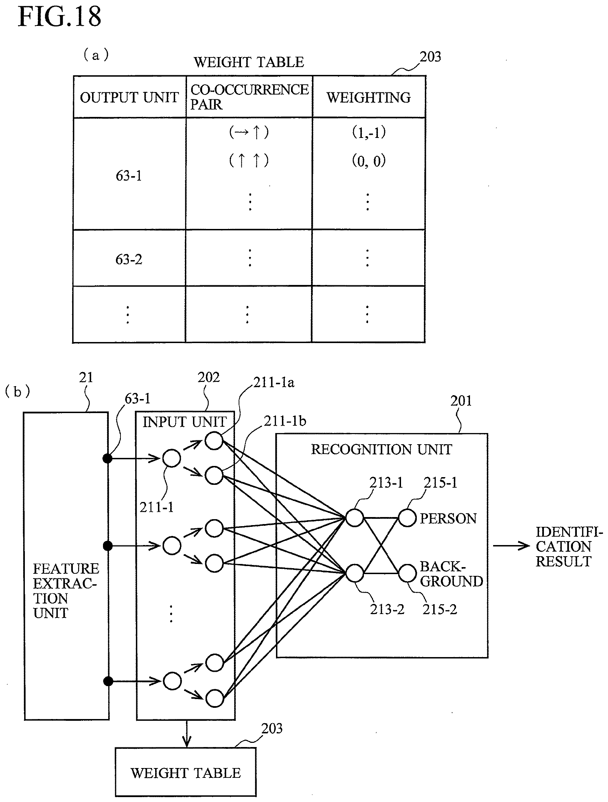

FIG. 18(a) is a view for illustrating a first modification.

In case of the MRCoHOG feature amounts, the number of occurrences of co-occurrence pairs is used to describe feature amounts of an image, and this is used for the image recognition, but some co-occurrence pairs have higher or lower importance in the image recognition.

Thus, in this modification, a co-occurrence pair with the high importance is checked by an identifier such as Real AdaBoost in advance, this is set in the weight table 203, and the co-occurrence pair with the high importance is thereby selected and input to the recognition unit 201 by the input unit 202.

Consequently, the number of co-occurrence pairs which become processing targets can be decreased, and a reduction in size of the circuit or in power consumption can be expected.

Since the co-occurrence pair with the high importance is selected and input in this manner and the input of a co-occurrence pair with the low importance is omitted, the weighting Wji of the co-occurrence pair as an omission target is set to (0, 0) in the weight table 203 according to this modification.

In the illustrated example, the weighting is set to (0, 0) for a co-occurrence pair (↑↑) from output units 63-1 and, even if this co-occurrence pair is input, the input unit 202 does not vote for it in the recognition unit 201.

In this modification, the input unit 202 functions as selecting means for selecting a predetermined feature element in feature elements and inputting it to the addition layer.

### (Second Modification)

Since various usage environments are envisaged for the image recognition device 200, such as mounting in a vehicle, the need to perform the image recognition using low-dimensional feature amounts may arise in some cases.

Thus, in this modification, an image recognition accuracy is enhanced by replicating the voting using the feature elements.

As shown in FIG. 18(b), in the input unit 202, an input node 211-1a and an input node 211-1b are provided in correspondence with an input node 211-1.

When a co-occurrence pair is input to the input node 211-1, the input unit 202 makes reference to the weighting for this co-occurrence pair in the weight table 203.

Moreover, the input unit 202 sets the weighting of a connecting portion between the input node 211-1a and the input node 211-1b and intermediate nodes 213 to the weighting which has been referred to, each vote is cast for the intermediate nodes 213 from these two input nodes 211-1a and 211-1b.

Consequently, since the voting using this co-occurrence pair is replicated for two votes, this is the same as replicating the co-occurrence pair and inputting it.

For each of other input nodes 211 in the input unit 202, two replication nodes are provided, and the input unit 202 replicates the voting.

When the replication is performed to cast votes at the same time, values which can be expressed by the voting increase from {-1,1} to {-2,0,2}, and hence the image recognition accuracy can be improved. If the voting is replicated threefold or more, expressible values increase.

In this manner, the input unit 202 functions as replicating means for sequentially replicating feature elements and inputting them to the addition layer.

When the feature elements are replicated and votes are conducted, the image recognition accuracy is improved for the following reason.

Although the first modification and the second modification have been described above, they can be combined with each other.

In this case, the image recognition device 200 uses the input unit 202 to select a co-occurrence pair to be input to the recognition unit 201, replicate the selected co-occurrence pair, and conduct votes in the recognition unit 201.

As described above, when an algorithm which requires the voting on a histogram for the feature description and a BNN, which is one of DNNs (deep neural network), for the recognition unit are used to identify an object, the equivalent identification can be achieved without creating a histogram by directly performing the addition and the subtraction using co-occurrence pairs from the input layer to the intermediate layer instead of creating a co-occurrence histogram.

Consequently, the memory consumption can be decreased while having the same effect as the histogram creation.

Whereas approximately 24 kilobytes are required to create a histogram in conventional examples, with the image recognition device 200, if the intermediate node 213 is set to 16 bits, the same effect as creating a histogram with 2×16=32 bits can be obtained.

The following effects can be obtained by the embodiment and the modifications described above.
(1) At the time of performing the identification using the BNN, the image recognition device 200 can decrease the memory consumption while having the same effect as creating a histogram by directly adding and subtracting the feature elements to the intermediate layer.
(2) The BNN achieves a reduction in processing cost by binarizing the weight and an activation function (-1, 1) in the calculation in the intermediate layer.
(3) Since the BNN can perform the calculation using the adder and the counter at the time of implementing in hardware, it can be implemented with a small cost.
(4) Since the image recognition device 200 can execute the identification processing based on the image recognition without waiting for the calculation for the creation of a histogram, the entire processing can be pipelined, and processing speed can be raised.
(5) The respective circuits operate simultaneously in synchronization with clocks, and performs the image recognition by simultaneously performing flow operations in which data flowing from the left is sequentially (successively) processed and flowed to the right, thus facilitating the implementation in hardware.

It is to be noted that the embodiment and the modifications described above can be also configured as follows.

### (1) Configuration 1

An image recognition device comprising:
image acquiring means for acquiring an image;
pixel value acquiring means for acquiring a pixel value of a pixel in the acquired image;
feature element acquiring means for sequentially acquiring a plurality of types of feature elements of feature amounts representing features of a subject from the acquired pixel value; and
image recognizing means for sequentially adding input values corresponding to the acquired feature elements with the use of a weighting learned for an image recognition target in advance, sequentially storing them, and performing image recognition with the use of the stored addition value.

### (2) Configuration 2

The image recognition device according to configuration 1, wherein the image recognizing means is a neural network comprising:
an input layer which sequentially acquires input values corresponding to the acquired feature elements with the use of the weighting learned for the image recognition target in advance;
an addition layer comprising an addition node which sequentially accepts the acquired input values, sequentially adds and sequentially stores the accepted input values, and sequentially outputs values corresponding to the stored addition values; and
an image recognition result output layer which is connected with the addition node using the weighting learned for the image recognition target in advance, sequentially accepts network input of values output from the addition layer, sequentially stores a total value of the accepted values, and outputs an image recognition result corresponding to the stored total value.

### (3) Configuration 3

The image recognition device according to configuration 1, wherein the neural network is a binary network.

### (4) Configuration 4

The image recognition device according to configuration 1, configuration 2, or configuration 3, wherein the image recognition result outputting means fixes the image recognition result after acquiring the total value corresponding to all the feature elements of the feature amounts.

### (5) Configuration 5

The image recognition device according to configuration 1, configuration 2, or configuration 3, wherein the image recognition result outputting means sequentially updates the image recognition result corresponding to the stored total value in connection with the update of the storage, and
outputs the image recognition result if the updated image recognition result is the same for a predetermined number of consecutive times.

### (6) Configuration 6

The image recognition device according to any one of configurations 1 to 5, wherein the pixel value acquiring means acquires luminance as pixel values, and
the feature element acquiring means acquires the feature elements based on luminance gradient directions using the luminance.

### (7) Configuration 7

The image recognition device according to configuration 6, wherein the feature element acquiring means acquires the feature element based on co-occurrence of the luminance gradient directions.

### (8) Configuration 8

The image recognition device according to configuration 7, wherein the image acquiring means acquires images with different resolutions of the same subject, and
the feature element acquiring means acquires the feature elements based on co-occurrences of the images with the different resolutions of the luminance gradient directions.

### (9) Configuration 9

The image recognition device according to any one of configurations 1 to 8, comprising selecting means for selecting a predetermined feature element of the acquired feature elements and inputting it to the addition layer.

### (10) Configuration 10

The image recognition device according to any one of configurations 1 to 9, comprising replicating means for sequentially replicating the acquired feature elements and inputting them to the addition layer.

### (11) Configuration 11

An image recognition program comprising:
an image acquiring function which acquires an image;
a pixel value acquiring function which acquires a pixel value of a pixel in the acquired image;
a feature element acquiring function which sequentially acquires a plurality of types of feature elements of feature amounts representing features of a subject from the acquired pixel value; and
an image recognizing function which sequentially adds input values corresponding to the acquired feature elements with the use of a weighting learned for an image recognition target in advance, sequentially storing them, and performing image recognition with the use of the stored addition value.
the functions being realized by a computer.

### (12) Configuration 12

An image recognition device comprising:
image acquiring means for acquiring an image;
pixel value acquiring means for acquiring a pixel value of a pixel in the acquired image;
feature element acquiring means for sequentially acquiring respective feature elements of feature amounts representing features of a subject from the acquired pixel value;
input value acquiring means for sequentially acquiring input values corresponding to the acquired feature elements with the use of the weighting learned for the image recognition target in advance;
an addition layer comprising an addition node which sequentially accepts network input of the acquired input values, sequentially adds and sequentially stores the accepted input values, and sequentially outputs values corresponding to the stored addition values; and
image recognition result outputting means which is network-connected with the addition node using the weighting learned for the image recognition target in advance, sequentially accepts the network input of values output from the addition layer, sequentially stores a total value of the accepted values, and outputs an image recognition result corresponding to the stored total value.

### REFERENCE SIGNS LIST

1a to 41 Pixel
21 Feature extraction unit
23 Image input unit
24b Medium-resolution unit
24c Low-resolution unit
25a, 25b, 25c Three-line buffer
26a, 26b, 26c Gradient direction calculation unit
27b Vertical doubling unit
27c Vertical quadrupling unit
28a, 28b, 28c Buffer
29 Timing controller
30a, 30b, 30c Co-occurrence pair calculation unit
40 Image
51, 52, 53 Data
55, 56, 57 Data column
61 Two-line buffer
63 Output unit
71 Semiconductor device
72 MRCoHOG accelerator
73 Video input interface
74 Video output interface
75 Input/output interface
76 Affine accelerator
77 Processor
78 RAM
80 Computer
81 CPU
82 ROM
83 RAM
84 Camera
85 Storage device
87 Input device
88 Output device
101 Image
102 Cell
106 Histogram
107 HOG feature amount
110 Pixel of interest
113 Co-occurrence matrix
117 CoHOG feature amount
120 High-resolution image
121 Medium-resolution image
122 Low-resolution image
125 Pixel of interest
127 MRCoHOG feature amount
200 Image recognition device
201 Recognition unit
202 Input unit
203 Weight table
210 BNN
211 Input node
213 Intermediate node
215 Output node
220, 221 Portion
225, 226 Expression

## Claims

1. An image recognition device comprising:
feature element acquiring means for acquiring feature elements of an image recognition target; and
image recognition means which has an addition layer to which the feature elements are directly input and which weights a plurality of values to the feature elements, and which recognizes an identification target with the use of an addition value obtained by sequentially adding the feature elements in the addition layer.

2. The image recognition device according to claim 1, wherein the image recognizing means is a binary network which assigns binary weights to the feature elements.

3. The image recognition device according to claim 1 or 2, wherein the image recognizing means comprises image recognition result outputting means for acquiring a total value of addition values obtained by sequentially adding the feature elements, and then fixing an image recognition result of the image recognition.

4. The image recognition device according to claim 1 or 2, wherein, the image recognizing means sequentially updates the image recognition result corresponding to the total value of the addition value obtained by sequentially adding the feature elements in connection with the update of the storage, and outputs the image recognition result if the updated image recognition result is the same for a predetermined number of consecutive times.

5. The image recognition device according to any one of claims 1 to 4, comprising:
image acquiring means for acquiring an image; and
pixel value acquiring means for acquiring luminance as a pixel value of a pixel in the acquired image,
wherein the feature element acquiring means sequentially acquires a plurality of types of feature elements of feature amounts representing features of the image recognition target in accordance with each feature element based on a luminance gradient direction using the acquired luminance, and
the image recognizing means performs sequential additions in the addition layer in accordance with each feature element.

6. The image recognition device according to claim 5, wherein the feature element acquiring means acquires the feature elements based on co-occurrences of the luminance gradient directions.

7. The image recognition device according to claim 6, wherein the image acquiring means acquires images with different resolutions of the same subject, and
the feature element acquiring means acquires the feature elements based on co-occurrences of the images with the different resolutions of the luminance gradient directions.

8. The image recognition device according to any one of claims 1 to 7, comprising:
selecting means for selecting a predetermined feature element of the acquired feature elements and inputting it to the addition layer.

9. The image recognition device according to any one of claims 1 to 8, comprising:
replicating means for sequentially replicating the acquired feature elements and inputting them to the addition layer.

10. An image recognition program for causing a computer to realize:
a feature element acquiring function which acquires feature elements of an image recognition target; and
an image recognizing function which has an addition layer to which the feature elements are directly input and which weights a plurality of values to the feature elements, and which recognizes an identification target with the use of an addition value obtained by sequentially adding the feature elements in the addition layer.
